# EUROPEAN PATENT SPECIFICATION

(11) **EP 1 128 143 B1**
(45) Date of publication and mention of the grant of the patent: **07.04.2004**
(21) Application number: 01100616.0
(22) Date of filing: 11.01.2001
(51) Int. Cl.: F25D 29/00, G01K 1/14

(54) **Refrigeration apparatus with support arrangement for the thermostat probe**
Kältegerät mit Halterungsanordnung für den Thermostatfühler
Appareil frigorifique avec agencement de support pour la sonde de thermostat

(30) Priority: 24.02.2000 IT PN000006 U
(43) Date of publication of application: 29.08.2001
(73) Proprietor: ELECTROLUX HOME PRODUCTS ITALY S.p.A., 33080 Porcia (Pordenone) (IT)
(72) Inventor: Bertolaccini, Andrea, 50050 Cerreto Guidi (FI) (IT); Lepri, Luciano, 50141 Firenze (FI) (IT)
(74) Representative: Giugni, Valter

(56) References cited:
- EP-A- 0 962 718
- CH-A- 242 283
- FR-A- 2 668 598
- PATENT ABSTRACTS OF JAPAN vol. 1998, no. 03, 27 February 1998 (1998-02-27) & JP 09 303911 A (FUNAI ELECTRIC CO LTD), 28 November 1997 (1997-11-28)

## Description

The present invention refers to a refrigerator or freezer appliance according to the preamble of claim 1.

Such a refrigerator is known from document CH-A-242283.

Largely known in the art, for these kind of refrigeration appliances having an "exposed" evaporator, ie. an evaporator arranged inside the food storage compartment of the refrigerator/freezer, is the practice based on the use of a support for the thermostat probe which is attached in an appropriate position with the aid of metal screws and other auxiliary fastening means.

These probes are usually applied on a shelf arranged horizontally inside the food storage compartment in order to accommodate food items thereon, wherein said shelf is at the same time used to at least partially apply also the evaporator thereon or it is the evaporator itself, made in the well-known Roll-Bond technology, that forms the structure of said shelf.

Such a technique is anyway largely known in the art, so that it shall not be illustrated here any further.

A drawback connected with this technique derives from the fact that the application of the thermostat probe calls for the use of minute mechanical parts, as well as an appropriate working effort, with the use of external tools, in view of attaching said probe by means of said minute mechanical parts. As a result, such a technique turns out to be particularly expensive and time-demanding owing to both the considerable lot of material used and the operations that must be performed, especially if the probe is for any reason whatsoever required to be disassembled and removed from the refrigerator appliance.

Furthermore, the use of screwdrivers and other tools may quite easily lead to the evaporator incurring some damage, under resulting loss of refrigerant charge and need for the whole evaporator to be replaced.

It therefore would be desirable, and is actually a purpose of the present invention to provide a refrigerator/ freezer appliance, preferably for home use, provided with at least a food storage compartment and an internal evaporator, in which the thermostat probe is capable of being assembled under a minimum possible usage of auxiliary fastening material, by means of techniques that are as fast and simple as possible, but anyway reliably effective, and above all is capable of being disassembled and removed without any difficulty at all, as well as without any use of tools.

According to the present invention, such an aim is reached in a particular type of evaporator and associated support arrangements as defined in claim 1. The invention is more fully described below by way of non-limiting example with reference to the accompanying drawings, in which:
- Figure 1 is a perspective view of a support bracket, in an open position thereof, according to the present invention;
- Figure 2 is an orthogonal view of the same support bracket, upon its having been closed, taken from the direction "H" of Figure 1;
- Figure 3 is a cross-sectional view of the same support bracket along the A-A section of Figure 2;
- Figure 4 is a front view of the support bracket of Figure 1, in a fully open position thereof;
- Figure 5 is a perspective view of a simplified embodiment of the same support bracket, with the two portions thereof folded at an angle of 90°;
- Figure 6 is a perspective view of a type of evaporator provided with perforations adapted to enable the above cited support bracket to be assembled thereon;

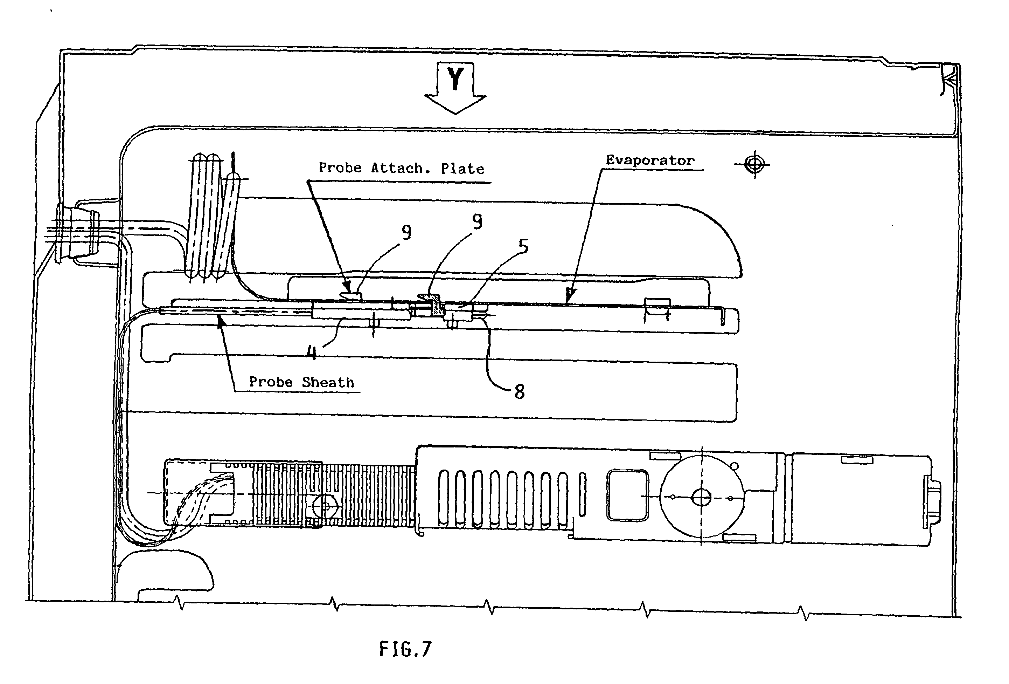

- Figure 7 is a cross-sectional view along the sectional plane of assembly of the support bracket on the evaporator;

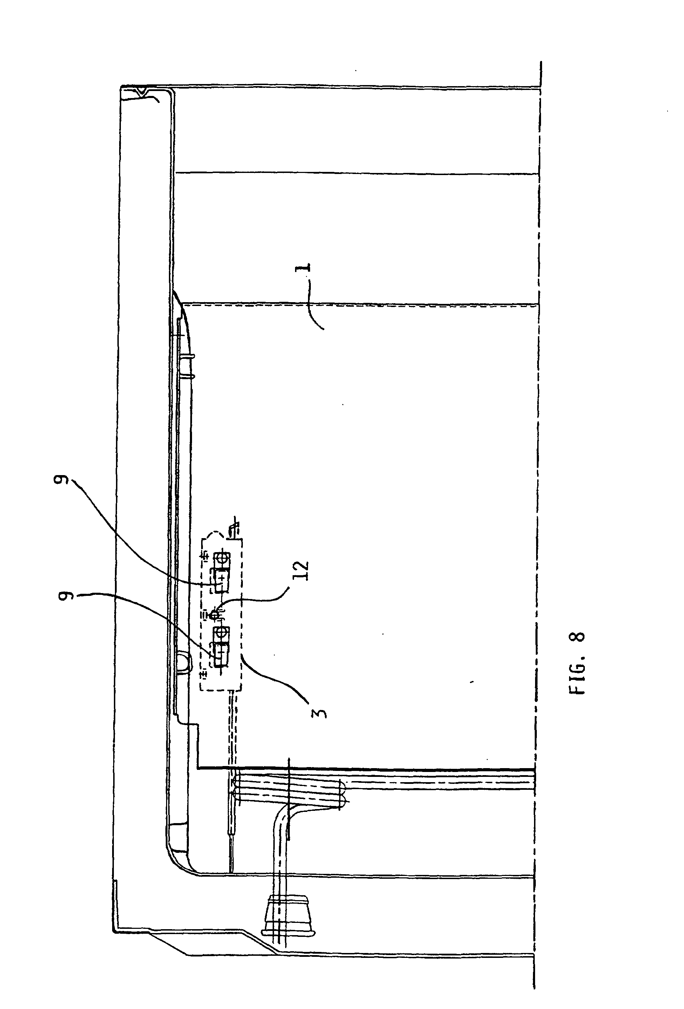

- Figure 8 is a top view, according to the view "Y" of Figure 7, of an evaporator according to the present invention, with the support bracket mounted correctly thereon.

A refrigerator appliance according to the present invention comprises an evaporator 1, at least a portion of which is plane, a thermostat (not shown) connected via an appropriate conduit to a probe 8 arranged nearly in contact with said evaporator, wherein such a contact is ensured by appropriate assembly and fastening means provided between probe and evaporator.

According to the present invention, these assembly and fastening means comprise:
a) a foldable and closable bracket 3,
b) appropriate through-perforations 10 provided in an appropriate plane portion of said evaporator.

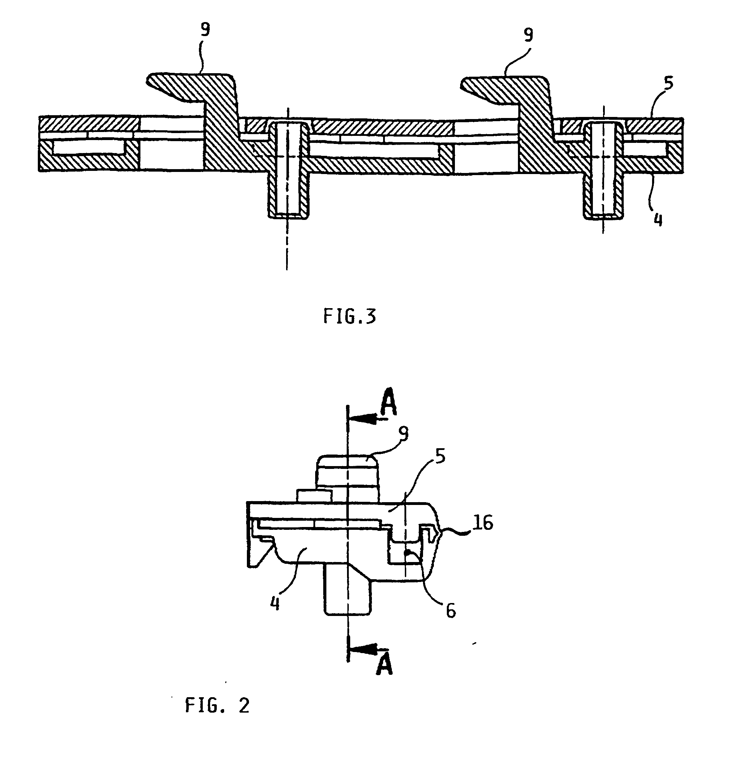

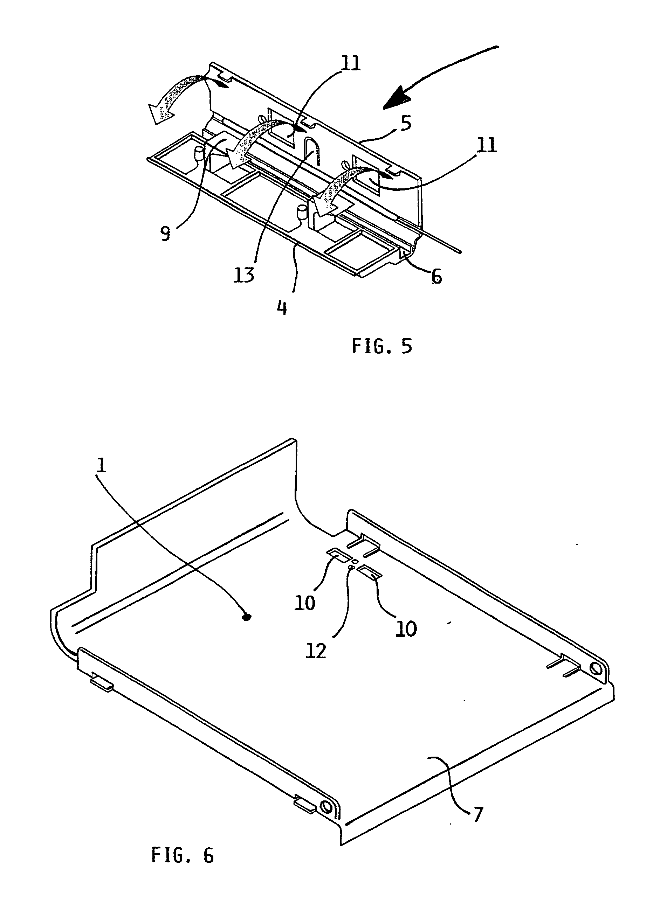

With reference to the Figures, the above cited bracket is made up by two distinct portions 4 and 5, which are connected to each other via a common pliable, ie. folding edge 16 in such a manner as to enable said two portions to be fully folded over each other along said edge, as this is illustrated in Figures 2, 3 and 5, so as to be able to obtain a more compact unit of a considerably smaller size.

Inside the first portion 4 of said bracket there is provided a longitudinal groove 6 adapted to accommodate the probe 8 of the thermostat (the latter not shown in the Figures).

Since this longitudinal groove 6 is rather deep, said probe comes to be situated in a position that is very close to the surface of the evaporator, wherein it is practically separated therefrom by only the thin surface of said portion 4 of the bracket 3, the thickness of which is exactly to this purpose made as thin as possible.

Said bracket is further provided with at least a wedge-shaped hook-on member 9 that protrudes outwardly from said bracket and is oriented parallel to the surface of the latter in the terminal portion thereof.

On the corresponding portion of the evaporator there is provided one or more perforations 10 corresponding to the number, size and distance of said wedge-shaped hook-on members 9.

Said members 9 and said perforations 10 must be so arranged and sized with respect to each other as to enable the bracket, when fully folded and closed together, to be firmly attached to the evaporator by simply inserting said protruding wedge-shaped members in corresponding perforations 10 in the evaporator and letting them slide until an edge of an aperture of the evaporator gets press-fitted and firmly engaged in the zone comprised between said hook-on members 9 and the portion of bracket therebelow.

The described solutions enable a number of improvements to be obtained.

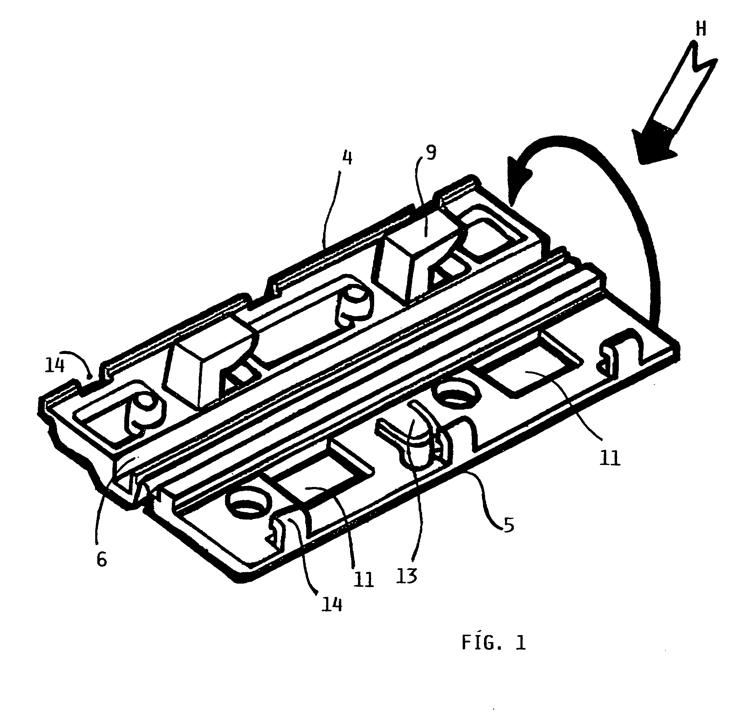

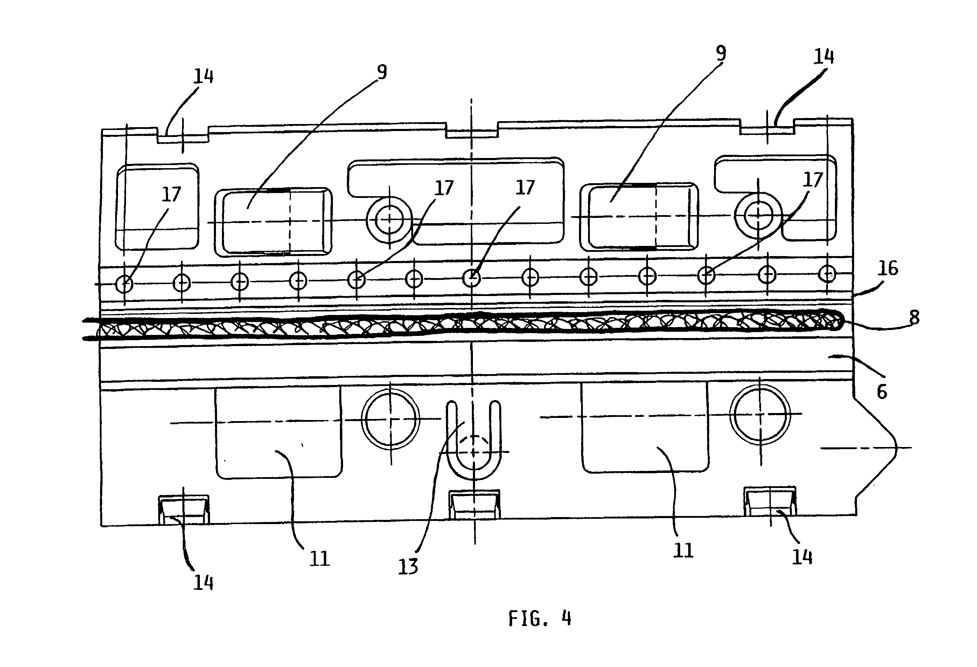

In particular, a first one of these improvements can be obtained by applying said wedge-shaped members on to the inner surface of a portion, eg. the first portion 4 of the bracket, and providing appropriate through-perforations 11 in the other portion 5, as this is in particular illustrated in Figures 1, 4 and 5, so that, when the bracket is then folded in its closed position, said members are capable of protruding from the same bracket on the opposite side thereof with respect to the portion to which they are actually applied; such a configuration is therefore able to ensure that, when the bracket is folded and closed together, and applied on to the evaporator in the afore illustrated manner, this automatically causes the bracket to be also firmly secured in its closed, ie. fully folded position.

A second one of such improvements is connected with the possibility for the bracket to be automatically and firmly attached in its exact position on the evaporator: such a possibility is brought about by the provision, on the same evaporator, of an appropriate seat 12, as well as the provision, on the outer surface of the second portion 5 of the bracket, a member 13, preferably made integrally therewith, which protrudes elastically outwardly. The overall configuration of the described elements must be such as to ensure that, when the bracket reaches its correct assembly position on the evaporator, said elastic member 13 gets engaged in said seat 12 and, at the same time, said hook-on members 9 engage the respective edges in correspondence of the respective perforations 10 in the evaporator.

This situation practically prevents the bracket from being able to displace tangentially, since hindered therefrom by said elastic member 13, and move away from the evaporator, since hindered therefrom by said wedge-shaped members 9. It therefore ensues that said bracket comes to be automatically fastened and locked in the proper, correct position.

A further improvement can be obtained by providing, along the edges of said bracket, appropriate devices 14 capable of being snap-fitted together, in such a manner as to ensure that even the insertion of the probe and the folding and closing together of the bracket may be completed only with manual, very simple and quickly performed operations without any use of tools.

Yet a further improvement can finally be obtained in view of facilitating a firm positioning of the probe 8 inside said groove 6. Such a firm positioning is greatly favoured by the presence of a plurality of pressing members 17, preferably constituted by small studs or pillars made integrally with said second portion 5, in such a manner as to ensure that, when the bracket is folded and closed together, said pressing members 17 move into resting on and, therefore, pressing against said probe, which therefore is in this way held automatically and firmly in its position by the same bracket being simply folded in its closed position.

## Claims

1. Refrigerator or freezer appliance, in particular intended for home use, comprising:
- at least a food storage compartment,
- an evaporator (1), of which at least a portion is plane,
- a thermostat associated to a respective probe (8) applied on to said plane portion of the evaporator,
- a device for firmly fastening said probe on to said evaporator,
**characterized in that**
- said-fastening device comprises a bracket (3) provided with a first (4) and a second portion (5) sharing a common edge (16) and capable to be closed together elastically in a "book-like" manner by folding them along said edge;
- the inner closable surface of one of said portions (4, 5) of said bracket is provided with a groove (6) in which the terminal portion of said probe is accomodated;
- said bracket is adapted to couple up, with an outer surface thereof, with the plane portion of the evaporator, said plane portion of said evaporator being provided with appropriate perforations (10), and said bracket being provided with means for engaging said perforations without any need for supplementary fastening or hook-on means to be provided.

2. Refrigeration appliance according to claim 1, **characterized in that** said means are constituted by at least a wedge-shaped hook-on member (9) protruding outwardly from one of said portions of said bracket, having a terminal portion oriented parallelly to said bracket, and adapted to get inserted removably in a respective one of said perforations (10).

3. Refrigeration appliance according to claim 2, **characterized in that** said wedge-shaped hook-on member (9) is attached on the inner wall of said second portion (5) of said bracket and protrudes from said first portion (4) through an appropriate respective perforation (11) provided in the latter, when the bracket (3) is folded in its closed position.

4. Refrigeration appliance according to any of the claims 2 or 3, **characterized in that** said bracket is further provided, on the outer surface thereof from which said wedge-shaped hook-on members protrude, with an outwardly protruding elastic member (13), and said evaporator is provided with an appropriate seat (12) adapted to accommodate in a press-fitting manner at least a terminal portion of said elastic member (13) when said bracket is fully applied on to said plane portion of said evaporator.

5. Refrigeration appliance according to any of the preceding claims, **characterized in that** said groove accommodating said probe is associated to pressure-exerting retaining means (17) provided inside said second portion and adapted to firmly hold in position the terminal portion of said probe when said bracket is fully closed together.

## Patentansprüche

1. Kühl- und/oder Gefriergerät, insbesondere für die Anwendung im Haushalt, mit:
- mindestens einem Lebensmittel-Aufbewahrungsraum,
- einem mit mindestens einem ebenen Teil versehenen Verdampfer (1),
- einem mit einem zugeordneten, am genannten ebenen Teil des Verdampfers angebrachten Fühler (8) verbundenen Thermostat,
- einer Vorrichtung zum Festhalten des genannten Fühlers am genannten Verdampfer,
**dadurch gekennzeichnet, dass**
- die genannte Haltevorrichtung einen Bügel (3) mit einem ersten Teil (4) und einem zweiten Teil (5) umfasst, die einen gemeinsamen Rand (16) teilen und durch Falten um den genannten Rand "buchartig" elastisch zusammenklappbar sind;
- die schließbare Innenfläche eines der genannten Teile (4, 5) des genannten Bügels mit einer Nut (6) versehen ist, die den Endteil des genannten Fühlers aufnehmen kann;
- der genannte Bügel mit einer eigenen Außenfläche am genannten ebenen Teil des Verdampfers befestigbar ist,
wobei der genannte ebene Teil des genannten Verdampfers mit entsprechenden Öffnungen (10) versehen ist und der genannte Bügel mit Mitteln versehen ist, die in die genannten Öffnungen eingreifen und eine Verbindung unter Ausschluss jeglicher zusätzlichen Befestigungs- oder Kupplungsmittel sicherstellen.

2. Kühl- und/oder Gefriergerät nach Anspruch 1, **dadurch gekennzeichnet, dass** die genannten Mittel aus einem keilförmigen Kupplungsglied (9) bestehen, das von einem der genannten Bügelteile nach außen hervorragt, einen sich parallel zum genannten Bügel erstreckenden Endteil aufweist und in eine der dazu bestimmten Öffnungen (10) lösbar einschnappbar ist.

3. Kühl- und/oder Gefriergerät nach Anspruch 2, **dadurch gekennzeichnet, dass** das genannte keilförmige Kupplungsglied (9) an der Innenwand des genannten zweiten Bügelteils (5) befestigt ist und bei zusammengeklapptem Bügel (3) vom genannten ersten Bügelteil (4) durch eine entsprechende, in der letztgenannten Bügelteil versehene Öffnung (11) herausragt.

4. Kühl- und/oder Gefriergerät nach einem der vorhergehenden Ansprüche 2 oder 3, **dadurch gekennzeichnet, dass** der genannte Bügel an seiner Außenfläche, aus der das genannte keilförmige Kupplungsglied herausragt, ferner mit einem nach außen hervorragenden elastischen Glied (13) versehen ist, und dass der genannte Verdampfer einen entsprechenden Sitz (12) aufweist, in den mindestens ein Endteil des genannten elastischen Gliedes (13) einschnappbar aufgenommen werden kann, wenn der genannte Bügel völlig am genannten ebenen Verdampferteil anliegt.

5. Kühl- und/oder Gefriergerät nach einem der vorhergehenden Ansprüche, **dadurch gekennzeichnet, dass** die genannte, zur Aufnahme des Thermostatenfühlers vorgesehene Nut mit Druck ausübenden Festhaltemitteln (17) zusammenwirkend gekoppelt ist, die innenseitig am genannten zweiten Bügelteil angeordnet sind und den Endteil des genannten Thermostatenfühlers bei völlig zusammengeklapptem Bügel fest in seiner Lage halten.

## Revendications

1. Appareil réfrigérateur ou congélateur, en particulier pourvu pour l'usage dans les ménages, comprenant:
- au moins un compartiment pour la conservation des aliments,
- un évaporateur (1), dont au moins une partie est plane,
- un thermostat associé à un senseur respectif (8) appliqué à ladite partie plane de l'évaporateur,
- un dispositif pour retenir solidement ledit senseur contre ledit évaporateur,
**caractérisé en ce que:**
- ledit dispositif de rétention comprend une bride (3) pourvue d'une première partie (4) et une deuxième partie (5) qui se partagent un bord commun (16) et sont aptes à se fermer d'une façon élastique l'une contre l'autre comme un livre en se repliant au long dudit bord commun;
- la surface intérieure apte à se fermer d'une desdites parties (4, 5) de ladite bride est pourvue d'une rainure (6), dans laquelle la partie terminale dudit senseur est accueillie;
- ladite bride est apte à s'accoupler par une propre surface extérieure avec la partie plane de l'évaporateur;
ladite partie plane dudit évaporateur étant pourvue d'ouvertures appropriées (10) et ladite bride étant pourvue de moyens pour engager lesdites ouvertures sans qu'il y ait besoin d'aucun moyen de fixation ou d'accrochage ultérieur.

2. Appareil réfrigérateur ou congélateur selon la revendication 1, **caractérisé en ce que** lesdits moyens sont constitués par au moins un élément d'accrochage cunéiforme (9) qui fait saillie vers l'extérieur d'une desdites parties de ladite bride, présente une partie terminale s'étendant parallèlement à ladite bride et est apte à s'insérer dans une respective desdites ouvertures (10).

3. Appareil réfrigérateur ou congélateur selon la revendication 2, **caractérisé en ce que** ledit élément d'accrochage cunéiforme (9) est attaché à la paroi intérieure de ladite deuxième partie (5) de ladite bride et, lorsque la bride (3) est repliée dans sa position de fermeture, est apte à faire saillie de la dite première partie (4) à travers une respective ouverture appropriée (11) pourvue dans ladite première partie.

4. Appareil réfrigérateur ou congélateur selon l'une quelconque des revendications 2 ou 3, **caractérisé en ce que** ladite bride, sur sa surface d'où lesdits éléments d'accrochage cunéiformes font saillie, est pourvue ultérieurement d'un élément élastique (13) faisant saillie vers l'extérieur, et que ledit évaporateur est pourvu d'un siège approprié (12) apte à accueillir au moins une partie terminale dudit élément élastique (13) y s'insérant par pression lorsque ladite bride est fermement appliquée contre ladite partie plane de l'évaporateur.

5. Appareil réfrigérateur ou congélateur selon l'une quelconque des revendications précédentes, **caractérisé en ce que** ladite rainure accueillant ledit senseur est associée à des moyens de rétention exerçant pression (17) qui sont pourvus à l'intérieur de ladite deuxième partie de la bride et sont aptes à retenir fermement la partie terminale dudit senseur en position lorsque ladite bride est repliée sur elle-même dans sa position de fermeture.
